# EUROPEAN PATENT SPECIFICATION

(11) **EP 4 138 429 B1**
(45) Date of publication and mention of the grant of the patent: **02.09.2026**
(21) Application number: 21788912.0
(22) Date of filing: 15.03.2021
(51) Int. Cl.: H04W 8/18, H04W 12/06

(54) **NETWORK ROAMING AUTHENTICATION METHOD AND APPARATUS, AND ELECTRONIC DEVICE AND STORAGE MEDIUM**
VERFAHREN UND VORRICHTUNG ZUR AUTHENTIFIZIERUNG VON NETZWERKROAMING SOWIE ELEKTRONISCHE VORRICHTUNG UND SPEICHERMEDIUM
PROCÉDÉ ET APPAREIL D'AUTHENTIFICATION D'ITINÉRANCE DE RÉSEAU, DISPOSITIF ÉLECTRONIQUE ET SUPPORT DE STOCKAGE

(30) Priority: 15.04.2020 CN 202010295124
(43) Date of publication of application: 22.02.2023
(73) Proprietor: ZTE Corporation, Shenzhen, Guangdong 518057 (CN)
(72) Inventor: ZHENG, Guobin, Shenzhen, Guangdong 518057 (CN); QIU, Yongqing, Shenzhen, Guangdong 518057 (CN); YANG, Haiwei, Shenzhen, Guangdong 518057 (CN)
(74) Representative: Osterhoff, Utz
(86) International application number: PCT/CN2021/080800
(87) International publication number: WO 2021/208655

(56) References cited:
- WO-A1-2018/129437
- CN-A- 109 660 978
- CN-A- 109 660 978
- CN-A- 110 191 458
- CN-A- 110 191 458
- CN-A- 112 449 339
- CHINA MOBILE: "Discussion of SA Only Network Support Roaming Users from NSA Network", 3GPP DRAFT; S2-1903848_SA2_NSA-SA ROAMING-V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Xi’an, China; 20190408 - 20190412, 2 April 2019 (2019-04-02), Mobile Competence Centre ; 650, route des Lucioles ; F-06921 Sophia-Antipolis Cedex ; France , XP051719986
- CHINA MOBILE, ZTE, CATT: "New WID on 5GC and EPC Interworking for Roaming", 3GPP DRAFT; C4-191276-NEW WID ON 5GC AND EPC INTERWORKING FOR ROAMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Xi'an, P.R.China; 20190408 - 20190412, 3 April 2019 (2019-04-03), Mobile Competence Centre ; 650, route des Lucioles ; F-06921 Sophia-Antipolis Cedex ; France , XP051706567

## Description

### TECHNICAL FIELD

Embodiments of the present application relate to the field of communications, and in particular to a network roaming authentication method, an apparatus, an electronic device and a storage medium.

### BACKGROUND

The 3rd Generation Partnership Project (3GPP) introduces the 5th Generation (5G) mobile communication network. The 5G network deployment of telecom operators is divided into two modes: a non-standalone (NSA) and a standalone (SA). As the deployment of 5G networks continues to accelerate, the networks of telecom operators using the NSA deployment mode face roaming intercommunication problems with the networks of telecom operators using the SA deployment mode.

The inventors found at least the following problems in the related technology: when a 5G user in NSA deployment mode roams to a 5G network in SA deployment mode, authentication and registration cannot be completed, and only 4G network can be used but not 5G network.

CN 110191458 A discloses a network roaming and intercommunication method, device, and system. The method comprises: a first network element receives a registration request of a user of an NG network under a second deployment method, wherein the first network element is a network element in an NG network under a first deployment method, the first network element being responsible for the security management, mobility management, and connection management of the user, and N is an integer greater than or equal to 2; the first network element communicates with a roaming and intercommunication device to acquire a first security authentication information and a first subscription data, wherein the first security authentication information is the user's security authentication information in the NG network under the first deployment method, said user being in the NG network under the second deployment method, and the first subscription data is the user's subscription data in the NG network under the first deployment method, said user being in the NG network under the second deployment method.

CN 109660978 A relates to a method and an apparatus for communication network roaming management, a device, a system and a storage medium. The method includes: receiving a subscription information acquisition request for requesting subscription information of a user to be registered from a first communication network; acquiring the subscription information of the user to be registered in a home communication network; and sending the subscription information to the first communication network to complete registration of the user to be registered in the first communication network.

### SUMMARY

The purpose of the embodiment of the present application is to provide a network roaming authentication method, an apparatus, an electronic device and a storage medium to achieve simple and efficient network roaming authentication without any changes to the existing network device.

To solve the above technical problems, the embodiments of the present application provides a network roaming authentication method, including:
receiving an authentication request for a terminal to access a first network under a first deployment mode, wherein the terminal is a registered user of the first network under a second deployment mode;
obtaining original authentication data of the terminal and generating first authentication information based on the original authentication data of the terminal, wherein the first authentication information conforms to a first network specification under the first deployment mode; and
feeding back the first authentication information to the first network under the first deployment mode for the first network under the first deployment mode to authenticate the terminal.

The embodiments of the present application also provides a roaming intercommunication device, including:
a receiving module, configured for receiving an authentication request from a terminal to access a first network under a first deployment mode, wherein the terminal is a registered user of the first network under a second deployment mode;
a conversion module, configured for obtaining original authentication data of the terminal and generating first authentication information based on the original authentication data of the terminal, wherein the first authentication information conforms to a first network specification under the first deployment mode; and
a communication module, configured for feeding back the first authentication information to the first network under the first deployment mode for the first network under the first deployment mode to authenticate the terminal.

The embodiments of the present application also provides an electronic device, including: at least one processor; and a memory communicated with the at least one processor; wherein the memory stores instructions executable by the at least one processor, the instructions are executed by the at least one processor to enable the at least one processor to perform the network roaming authentication method as mentioned above.

The embodiments of the present application also provides a computer readable storage medium, characterized in that, a computer program is stored on the computer readable storage medium, and the computer program, when executed by a processor, implements the network roaming authentication method as mentioned above.

### BRIEF DESCRIPTION OF THE DRAWINGS

One or more embodiments are illustrated exemplarily by corresponding drawings, and these exemplary illustrations do not constitute a limitation on the embodiments.
FIG. 1 is a schematic diagram of a service-based 5G network architecture in 3GPP of the prior art.
FIG. 2 is a first schematic diagram of an NSA 5G deployment mode under the 5G network architecture of the prior art.
FIG. 3 is a second schematic diagram of the NSA 5G deployment mode under the 5G network architecture of the prior art.
FIG. 4 is a schematic diagram of the SA 5G deployment mode under the 5G network architecture of the prior art.
FIG. 5 is a flowchart of a network roaming authentication method according to a first embodiment of the present application.
FIG. 6 is a flowchart of a network roaming authentication method according to a second embodiment of the present application.
FIG. 7 is a flowchart of the first authentication information generation method according to a second embodiment of the present application.
FIG. 8 is a flowchart of the first authentication information generation method according to the second embodiment of the present application.
FIG. 9 is a schematic structural view of a roaming intercommunication device according to a third embodiment of the present application.
FIG. 10 is a schematic structural view of an electronic device according to a fourth embodiment of the present application.

### DETAILED DESCRIPTION OF THE EMBODIMENTS

In order to make the purpose, technical solutions and advantages of the embodiments of the present application clearer, each embodiment of the present application will be described in detail below in conjunction with the drawings. However, it will be understood by those skilled in the art that in the various embodiments of the present application, many technical details are provided to enable the reader to better understand the present application. However, even without these technical details, various variations and modifications based on each of the following embodiments, the technical solutions protected by the present application can be realized. The following embodiments are divided for the convenience of description and shall not constitute any limitation to the specific implementation of the present application, and each embodiment can be combined with each other and referenced to each other without contradiction.

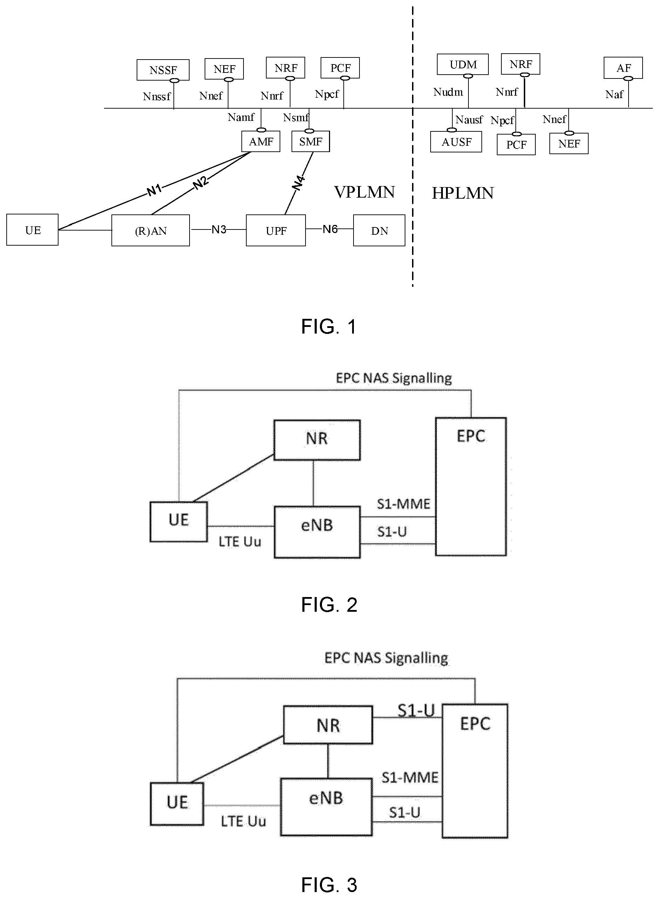

Currently, 3GPP proposes a 5G network architecture based on a service-based interface as shown in FIG. 1, which includes a visited public land mobile network (VPLMN) and a home public land mobile network (HPLMN).

The access and mobility management function (AMF) is responsible for subscriber mobility management and connection management. The session management function (SMF) supports the establishment, modification and release of the sessions of 3GPP and Non-3GPP, and is responsible for the allocation and management of a user equipment (UE) internet protocol (IP) addresses; the implementation and termination of unified control policies. An authentication server function (AUSF) provides a unified authentication of 3GPP and Non-3GPP access. A unified data management (UDM) provides subscriber contract data management and mobility management functions.

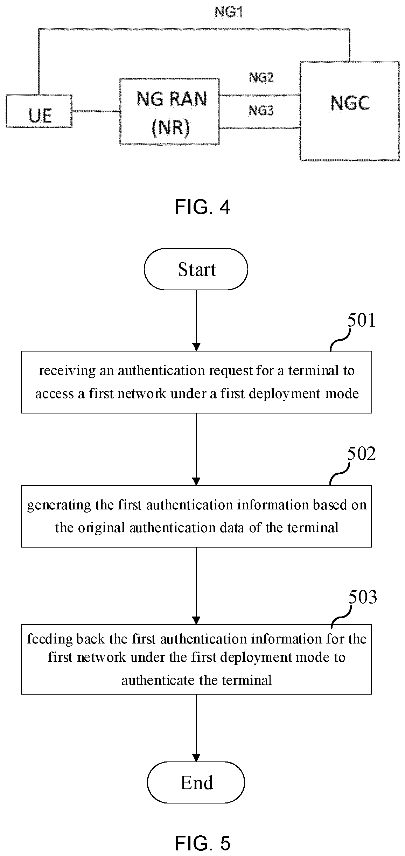

The 5G network deployments of telecom operators are divided into two deployment modes: a non-standalone (NSA) and a standalone (SA), with NSA deployments shown in FIGS. 2 and 3, and SA deployments shown in FIG. 4.

For operators who choose the NSA deployment mode for 5G services, the telecom operator provides 5G high-speed data services to subscribers through the 4G core network (i.e., evolved core network). The subscriber's security authentication and contract data are provided by the home location register (HLR) or home subscriber server (HSS) of the 4G core network.

For operators who choose SA deployment mode for 5G services, 5G services are provided to subscribers through the deployed 5G core network. The subscriber's security authentication is provided by the AUSF device of the 5G core network, and the subscriber's contract data is provided by the UDM device of the 5G core network.

As the deployment process of 5G network continues to accelerate, the networks of telecom operators using the NSA deployment mode face roaming intercommunication problems with the networks of telecom operators using the SA deployment mode.

The users of telecom operators under SA deployment mode can roam and register normally through 5G-capable dual-mode terminals in 5G network under NSA deployment mode, while the users of telecom operators under NSA deployment mode roam and register through 5G-capable dual-mode terminals in 5G network under SA deployment mode, because they cannot invoke the authentication service of AUSF and registration service of UDM through the hyper text transport protocol (HTTP) of 5G network service interface, resulting in the user of the 5G network under the NSA deployment mode can only use the 4G network but not the 5G network when roaming to the 5G network under the SA deployment mode.

A first embodiment of the present application relates to a network roaming authentication method, which includes: receiving an authentication request for a terminal to access a first network under a first deployment mode, wherein the terminal is a registered user of the first network under a second deployment mode; obtaining original authentication data of the terminal and generating first authentication information based on the original authentication data of the terminal, wherein the first authentication information conforms to a first network specification under the first deployment mode; and feeding back the first authentication information to the first network under the first deployment mode for the first network under the first deployment mode to authenticate the terminal. The authentication information of the first network under the first deployment mode is generated by the roaming intercommunication device for the first network under the first deployment mode to authenticate the access of the terminal. The first authentication information is generated directly based on the original authentication information, simple, accurate, and high-line network roaming authentication of the terminal is realized without any changes to the existing network device.

The network roaming authentication method in the embodiment can be applied to network roaming authentication between networks of the same generation under different deployment modes, and can also be applied to network roaming authentication between networks of different generations for terminals that have opened networks of different generations, and the embodiment is illustrated by applying to the network roaming authentication between 5G networks of different deployment modes.

The following is a specific description of the implementation details of the network roaming authentication method of the embodiment, and the following is only the implementation details provided for ease of understanding and is not necessary to implement the embodiment.

The specific process of a network roaming authentication method in the embodiment is shown in FIG. 5, and specifically includes the following steps.

Step 501, receiving an authentication request for a terminal to access a first network under a first deployment mode.

Specifically, after the terminal initiates an authentication and registration request to the device responsible for security management, mobility management, and connection management of the user in the first network under the first deployment mode, the first network under the first deployment mode initiates a service request to the roaming intercommunication device, and the roaming intercommunication device receives the authentication request for the terminal to access the first network under the first deployment mode. The terminal is the registered user of the first network under the second deployment mode.

In an example, the first network is a 5G network, the first deployment mode is a standalone deployment SA mode, the second deployment mode is a non-standalone deployment NSA deployment mode, and the terminal is a registered user of the 5G network under the NSA deployment mode that uses the second network, i.e., the 4G network, to implement 5G services, then the AMF in the 5G network under the SA deployment mode, after receiving the service request of the registered terminal of the 5G network under the NSA deployment mode, initiates an authentication request to the roaming intercommunication device, and the roaming intercommunication device receives the authentication request initiated by the AMF for the terminal to access the 5G network under the SA deployment mode.

In addition, the first network may be a 2G, 3G, 4G or higher generation mobile communication network, and the first deployment mode and the second deployment mode may also be a deployment mode of any generation of mobile communication networks having different deployment modes.

In addition, the terminal in the embodiment may be at least one of the following: a long tern evolution/new radio (LTE/NR), a multi-mode multi-standby terminal, an LTE/NR multi-mode single-standby terminal.

Step 502, generating the first authentication information based on the original authentication data of the terminal.

Specifically, the roaming intercommunication device, after receiving the authentication request for the terminal to access the first network under the first deployment mode, determines the terminal corresponding to the authentication request based on the received authentication request, then obtains the original authentication data of the terminal, and generates the first authentication information based on the original authentication data of the terminal; wherein the first authentication information conforms to the first network specification under the first deployment mode.

In an embodiment, the roaming intercommunication device receives the authentication request of the first network under the first deployment mode for access to the terminal, and then generates a home environment authentication vector based on the original authentication data of the terminal, generates a service environment authentication vector based on the home environment authentication vector, and takes the home environment authentication vector and the service environment authentication vector as the first authentication information, wherein the home environment authentication vector and the service environment authentication vectors conform to the first network specification under the first deployment mode.

When obtaining the original authentication data of the terminal, the original authentication data of the terminal can be detected whether there is the original authentication data of the terminal in the pre-created authentication database; wherein the authentication database includes the original authentication data of a plurality of pre-imported terminals; and when there is the original authentication data of the terminal in the authentication database, the original authentication data of the terminal is obtained from the authentication database.

For example, the original authentication data may include an international mobile subscriber identification number (IMSI), an authentication secret key Ki (key identifier), etc. After the roaming intercommunication device receives a service request of the 5G network under the SA deployment mode, it detects that the original authentication data of the terminal exists in the authentication database, reads the terminal's IMSI and Ki from the authentication database, and then, in order to ensure a smooth comparison of the authentication vectors, reads the terminal's IMSI and Ki according to the requirements of 3GPP protocol, sets the separation bit of the authentication management domain input parameter AMF to 1, calculates the expected symbol response XRES, the encryption key CK, the integrity key IK and the anonymous key AK according to the standard derivation function defined by 3GPP protocol, Ki and random number RAND calculated by using random hash algorithm, and calculates the parametric symbol authentication code such as key authentication server function (Kausf) specified by the 3GPP protocol according to Ki, RAND, sequence number (SQN) and AMF.

Then the RAND calculated by using the random hash algorithm is used as the random number RAND in the 5G home environment authentication vector (5G HE AV); the authentication token AUTN in the 5G HE AV is calculated according to SQN and the key derivation function (SQN⊕AK∥AMF∥MAC), and the authentication token AUTN in the 5G HE AV is calculated according to the parameters FC, service name SN, XRES, IK, CK and RAND as specified by the 3GPP protocol, the expanded expected symbolic response XRES* in the 5G HE AV is calculated by the key derivation function KDF (KDF(CK∥IK, S)), and the Kausf in the 5G HE AV is calculated by the key derivation function (CK∥IK, S) based on IK, CK, FC, SN, SQN and AK. The key derivation functions used in the calculation are those specified in the 3GPP protocol, which are not repeated here.

Then the random number RAND and authentication token AUTN in 5G HE AV are used as RAND and AUTN in 5G service environment authentication vector (5G SE AV), and then the corresponding hash expected response HXRES* of the expanded hash expectation symbol in 5G SE AV is calculated by SHA-256 hash algorithm according to XRES* and RAND in 5G HE AV; the Kseaf in 5G SE AV is calculated by the key derivation function according to the service name SN, FC and Kausf in 5G HE AV. Then the obtained 5G SE AV and 5G HE AV are used as the first authentication information. The original authentication data of the terminal pre-imported in the device is obtained and the first authentication information is generated based on the locally stored original authentication data, to make the first authentication information to be generated directly and locally without making any changes to the existing network equipment while avoiding the interaction with the existing network equipment as much as possible and improving the efficiency of the generation of the first authentication information.

In another embodiment, when generating the first authentication information based on the original authentication data of the terminal, the roaming intercommunication device first generates the authentication vector quintet based on the original authentication data of the terminal, and then generates the first authentication vector based on the authentication vector quintet.

For example, according to the 3GPP protocol, the roaming intercommunication device sets the separation bit of the authentication management field AMF to 1, and calculates and generates the authentication vector quintet {RAND (Random challenge), XRES (Expected Response), IK (Integrity Key), CK (Cipher Key), AUTN (Authentication token)}, the 5G HE AV is then calculated based on the authentication vector quintet to generate the 5G HE AV, and the 5G SE AV is further calculated based on the 5G HE AV to generate the 5G SE AV, and the 5G SE AV is carried in the first authentication information to generate the first authentication information. The 5G HE AV and 5G SE AV are generated in a roughly similar way to the generation method in the previous example, and will not be repeated here.

In addition, when obtaining the original authentication data of the terminal, when there is no original authentication data of the terminal in the authentication database, the original authentication data of the terminal is obtained from the operator BOSS system. The original authentication data of the terminal is obtained from the operator BOSS system to generate the first authentication information when the original authentication data of the terminal is not pre-stored locally, the flexibility of the generation of the first authentication information and the probability of the accurate generation of the first authentication information during the access process of the terminal are improved.

Step 503, feeding back the first authentication information for the first network under the first deployment mode to authenticate the terminal.

Specifically, after the roaming intercommunication device generates the first authentication information based on the original authentication data of the terminal, it feeds the first authentication information to the first network under the first deployment mode for the first network under the first deployment mode to authenticate the terminal, and then the first network under the first deployment mode completes the registration of the terminal in the first network under the first deployment mode based on the obtained registration information of the terminal, thereby connecting the terminal to the first network under the first deployment mode to achieve authentication and registration of the terminal roaming to the first network under the first deployment mode.

For the reason that those skilled in the art understands the subsequent security authentication and registration process, the embodiment does not describe the subsequent security authentication process of the AMF and the subsequent registration process of the UDM.

Thus, the embodiment provides a network roaming authentication method, where the roaming intercommunication device receives an authentication request for a terminal to access the first network under the first deployment mode, generates the first authentication information based on the original authentication data of the terminal, and then completes the authentication of the terminal to access the first network under the first deployment mode by interacting with the first network under the first deployment mode. The roaming intercommunication device generates the first authentication information directly based on the original authentication data of the terminal, to simplify the process of generation of the first authentication information, improve the efficiency of generation of the first authentication information, and complete efficient network roaming authentication of the terminal without any change to the existing network equipment. The first authentication information is generated by the real-time import of the original authentication data of the terminal, the flexibility of generation of the authentication information and the probability of successful generation of the authentication information are improved.

The second embodiment of the present application relates to a network roaming authentication method, and the second embodiment is substantially the same as the first embodiment. In the embodiment, when the original terminal data is not pre-stored locally, it detects whether the terminal is within the jurisdiction of the device, and in response that the terminal is not within the jurisdiction of the device, it directly feeds the authentication failure information to the first network under the first deployment mode, and the first network under the first deployment mode re-initiates the authentication request to the remaining device; in response that the terminal is within the jurisdiction of the device, the original authentication data of the terminal is imported from the operator, to improve the flexibility, accuracy and efficiency of the generation of the first authentication information.

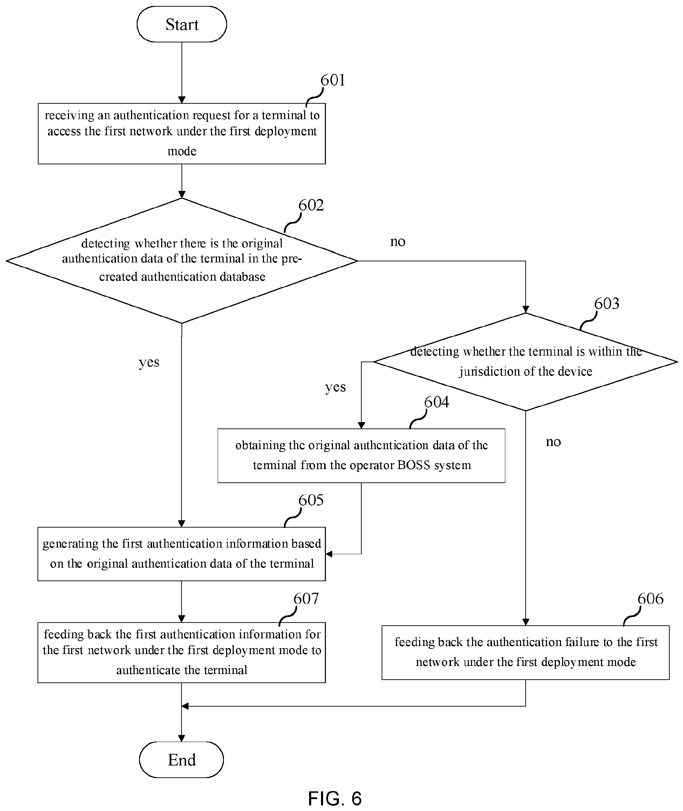

A specific process of a network roaming authentication method in the embodiment is shown in FIG. 6 and specifically includes the following steps:
Step 601, receiving an authentication request for a terminal to access the first network under the first deployment mode.

The step 601 of this embodiment is substantially the same as the step 501 of the first embodiment, and will not be repeated here.

Step 602, detecting whether there is the original authentication data of the terminal in the pre-created authentication database, and in response that there is the original authentication data of the terminal in the authentication database, entering step 605, and in response that there is on original authentication data of the terminal in the authentication database, entering step 603.

Specifically, after receiving an authentication request for a terminal to access the first network under the first deployment mode, the roaming intercommunication device detects whether there is the original authentication data of the terminal in the pre-created authentication database; the authentication database includes pre-imported original authentication data of a plurality of terminals; in response that there is the original authentication data of the terminal in the authentication database, it enters step 605 to generate the first authentication information based on the pre-stored original authentication. In response that there is no original authentication data of the terminal in the authentication database, it enters the step 603.

In addition, when creating the authentication database, the original authentication data of a plurality of terminals within the jurisdiction of the roaming intercommunication device can be imported into the roaming intercommunication device through a cutting tool, a batch import operator BOSS system or an information technology (IT)/operator BOSS system in advance according to the jurisdiction assigned to each roaming intercommunication device, or the original authentication data of a plurality of terminals can be bulk imported into the authentication database at a preset interval when an authentication request is received. The original authentication data of a plurality of terminals are imported into the authentication database at a preset interval when an authentication request is received. After the authentication database is established, it is also possible to import the original authentication data of the new terminals according to the new terminals in the jurisdiction of the device after receiving the authentication request of the terminal for access or reaching the preset time interval, so as to update the data in the preset database.

Step 603, detecting whether the terminal is within the jurisdiction of the device, and in response that the terminal is within the jurisdiction of the device, entering step 604; in response that the terminal is not within the jurisdiction of the device, entering step 606.

Specifically, after setting the roaming intercommunication device, the jurisdiction is set for the roaming intercommunication device, and when the authentication database of the roaming intercommunication device does not include the original authentication data of the terminal, first it detects whether the terminal is within the jurisdiction of the device, and in response that the terminal is within the jurisdiction of the device, it enters step 603 to obtain the original authentication data of the terminal from the operator BOSS system; in response that the terminal is not within the jurisdiction of the device, it enters step 606 to forward the authentication request of the terminal to the target device; the target device is a device governing the terminal.

Step 604, obtaining the original authentication data of the terminal from the operator BOSS system.

Specifically, after detecting that the terminal is within the jurisdiction of the roaming intercommunication device, the original authentication data of the terminal is requested from the operator BOSS system, and the original authentication data of the terminal is obtained from the operator BOSS system based on the data returned from the operator BOSS system and stored in the pre-created authentication database.

Step 605, generating the first authentication information based on the original authentication data of the terminal.

When generating the first authentication information, if the roaming intercommunication device has pre-stored the original authentication data of the terminal locally, it obtains the original authentication information of the terminal from the authentication database and generates the first authentication information based on the original authentication data of the terminal, and if the original authentication data of the terminal is not pre-stored, it receives and stores the original authentication data imported by the operator BOSS system and generates the first authentication information based on the original authentication data obtained from the operator BOSS system.

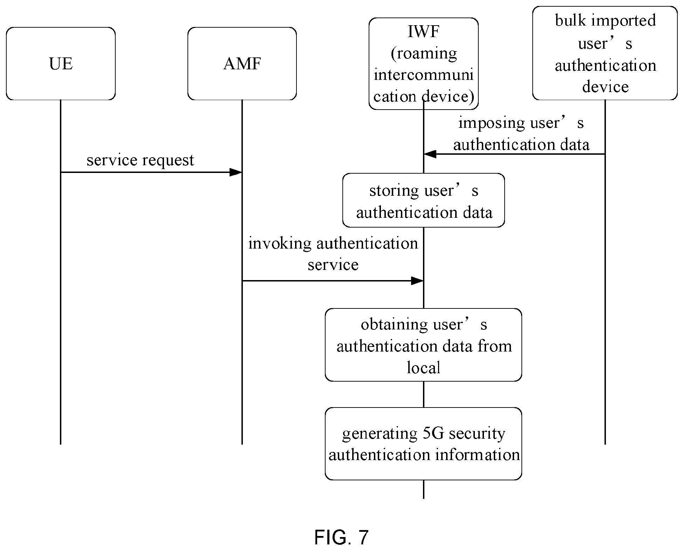

In an embodiment, the pre-created authentication database contains the original authentication data of the terminal, then the roaming intercommunication device generates the first authentication information based on the locally pre-stored original authentication data, and the flowchart of generation of the first authentication information shown in FIG. 7 includes: storing bulk imported original authentication data by the user for authentication in the roaming intercommunication device, and then the AMF in the 5G network under the SA deployment mode, after receiving the service request from the terminal UE, initiating an authentication service call to the IWF; the IWF obtaining the original user authentication data from the local and generating 5G security authentication information directly based on the original authentication data obtained from the pre-stored database.

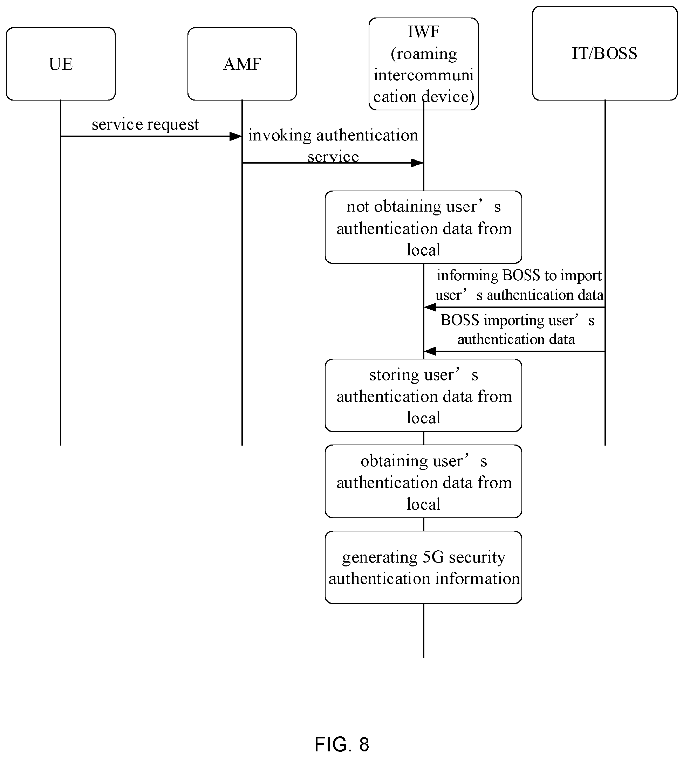

In another embodiment, the pre-created authentication database does not contain the original authentication data of the terminal, and the terminal is within the jurisdiction of the device, then the roaming intercommunication device generates the first authentication information based on the original authentication data imported from the operator BOSS system, and the flowchart of generation of the first authentication information shown in FIG. 8 includes: the AMF in the 5G network under the SA deployment mode receiving the service request of the terminal, the AMF initiating an authentication service call to the IWF; the IWF notifying the operator BOSS system to import the original authentication data of the terminal, then receiving the original authentication data imported by the operator BOSS system and storing the original authentication data obtained from the operator BOSS system in the authentication database, then invoking the original authentication data of the terminal and generating the 5G security authentication information according to the original authentication data of the terminal.

Step 606, feeding back the authentication failure to the first network under the first deployment mode.

Specifically, the roaming intercommunication device directly feeds the authentication failure to the first network under the first deployment mode when the terminal does not belong to the current jurisdiction of the roaming intercommunication device. The first network under the first deployment mode then re-initiates the authentication request to the remaining roaming intercommunication devices. By directly feeding back the authentication failure when the terminal is not within the jurisdiction, the processing speed of the authentication request by the device is improved.

Step 607, feeding back the first authentication information for the first network under the first deployment mode to authenticate the terminal.

Step 607 of this embodiment is substantially the same as step 503 of the first embodiment, and will not be repeated here.

Thus, the embodiment provides a network roaming authentication method to pre-assign jurisdictions to the roaming intercommunication devices to improve the processing efficiency of each roaming intercommunication device when a terminal performs network roaming authentication; the authentication requests is processed correspondingly according to the terminal and the jurisdictions of the roaming intercommunication device, the authentication request of the terminal not in the jurisdiction is forwarded to the target device for processing, to further improve the generation efficiency and flexibility of the first authentication information, to improve the quality of the network roaming authentication of the terminal.

In addition, those skilled in the art can understand that the division of steps in the above various methods is only for the purpose of clear description, and the implementation can be combined into one step or split for some steps and decomposed into a plurality of steps, as long as they include the same logical relationship, they are all within the scope of the present application; adding insignificant modifications or introducing insignificant designs to the algorithm or the process, but not changing its algorithm and the core design of the process is within the scope of the present application.

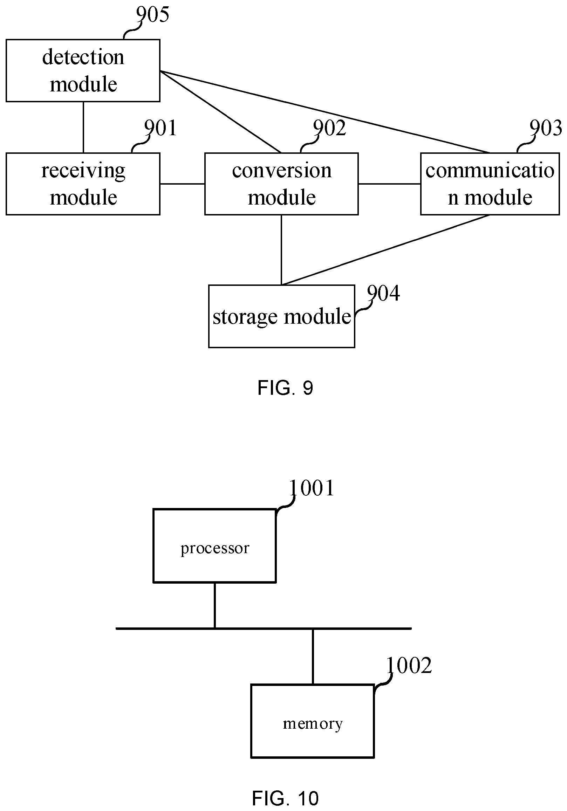

The third embodiment of the present application relates to a roaming intercommunication device, as shown in FIG. 9, including:
a receiving module 901, configured for receiving an authentication request from a terminal to access a first network under a first deployment mode. wherein the terminal is a registered user of the first network under a second deployment mode;
a conversion module 902, configured for obtaining original authentication data of the terminal and generating first authentication information based on the original authentication data of the terminal, wherein the first authentication information conforms to a first network specification under the first deployment mode; and
a communication module 903, configured for feeding back the first authentication information to the first network under the first deployment mode for the first network under the first deployment mode to authenticate the terminal.

In one embodiment, the roaming intercommunication device further includes: a storage module 904 further configured for storing pre-imported original authentication data of a plurality of terminals, a detection module 905 further configured for detecting whether the original authentication data of the terminal has been pre-imported, and a communication module 903 further configured for obtaining original authentication data of the terminal from an operator BOSS system when detecting that the original authentication data of the terminal has not been pre-imported.

In another embodiment, the detection module 905 is further configured for detecting whether the terminal is within the jurisdiction of the device, and the communication module 903 is configured for obtaining the original authentication data of the terminal from the operator BOSS system when the terminal is within the jurisdiction of the device, and directly feeding back the authentication failure to the first network under the first deployment mode when the terminal is not within the jurisdiction of the device.

In another embodiment, the conversion module 902 is configured for generating a home environment authentication vector based on the original authentication data of the terminal, generating a service environment authentication vector based on the home environment authentication vector, and taking the home environment authentication vector and the service environment authentication vector as the first authentication information; wherein the home environment authentication vector and the service environment authentication vector conform to the first network specification under the first deployment mode.

In another embodiment, the first network includes a 5G network; the first deployment mode is a stand-alone deployment mode and the second deployment mode is a non-stand-alone deployment mode.

It is not difficult to find that the embodiment is an apparatus corresponding to the first embodiment, and this embodiment can be implemented with the first embodiment in conjunction with each other. The relevant technical details mentioned in the first embodiment are still valid in the present embodiment, and in order to reduce repetition, they are not repeated here. Accordingly, the relevant technical details mentioned in the present embodiment can also be applied in the first embodiment.

It is worth mentioning that each module involved in this embodiment is a logical module, and in practical application, a logical unit can be a physical unit, or a part of a physical unit, or can be realized as a combination of a plurality of physical units. In addition, in order to highlight the innovative part of the present application, the embodiment does not introduce units that are less closely related to solving the technical problem presented by the present application, but this does not indicate that other units do not exist in the present embodiment.

A fourth embodiment of the present application relates to an electronic device, as shown in FIG. 10, including: at least one processor 1001, and a memory 1002 communicated with the at least one processor 1001; wherein the memory 1002 stores instructions executable by the at least one processor 1001, the instructions are executed by the at least one processor 1001 to enable the at least one processor 1001 to perform the network roaming authentication method described above.

The memory and the processor are connected using a bus, and the bus may include any number of interconnected buses and bridges, and the bus connects various circuits of one or more processors and the memory together. The bus may also connect together various other circuits such as peripherals, voltage regulators, and power management circuits, which are well known in the art and therefore will not be further described herein. The bus interface provides an interface between the bus and the transceiver. The transceiver may be a single element or a plurality of elements, such as a plurality of receivers and transmitters, providing units for communicating with various other apparatus on a transmission medium. Data processed by the processor is transmitted over the wireless medium via an antenna, and in the embodiment, the antenna also receives the data and transmits it to the processor.

The processor is responsible for managing the bus and the usual processing, and may also provide various functions including timing, peripheral interfaces, voltage regulation, power management, and other control functions, and the memory may be used to store data used by the processor in performing operations.

A fifth embodiment of the present application relates to a computer readable storage medium storing a computer program. The computer program when executed by the processor implements the method embodiment described above.

That is, it is understood by those skilled in the art that all or some of the steps in the method of the above embodiments can be accomplished by instructing the relevant hardware by means of a program stored in a storage medium including a number of instructions to cause a device (which may be a microcontroller, a chip, etc.) or processor to perform all or some of the steps of the method described in the various embodiments of the present application. The aforementioned storage media include: a USB, a mobile hard disk, a read-only memory (ROM), a random access memory (RAM), a disk or a CD-ROM, and other media that can store program code.

Those skilled in the art can understand that the above embodiments are specific embodiments for realizing the present application, and in practical application, various changes can be made to them in form and details without deviating from the scope of the present application.

## Claims

1. A network roaming authentication method, comprising
(501), receiving an authentication request for a terminal to access a first network under a first deployment mode, wherein the terminal is a registered user of the first network under a second deployment mode;
(502), obtaining original authentication data of the terminal and generating first authentication information based on the original authentication data of the terminal, wherein the first authentication information conforms to a first network specification under the first deployment mode; and
(503), feeding back the first authentication information to the first network under the first deployment mode for the first network under the first deployment mode to authenticate the terminal.

2. The network roaming authentication method according to claim 1, wherein the obtaining the original authentication data of the terminal comprises:
(602), detecting whether there is the original authentication data of the terminal in a pre-created authentication database, wherein the authentication database comprises pre-imported original authentication data of a plurality of terminals; and
in response that there is the original authentication data of the terminal in the authentication database, obtaining the original authentication data of the terminal from the authentication database.

3. The network roaming method according to claim 2, wherein the obtaining the original authentication data of the terminal further comprises:
(604), in response that there is no original authentication data of the terminal in the authentication database, obtaining the original authentication data of the terminal from an operator BOSS system.

4. The network roaming method according to claim 3, wherein before the obtaining the original authentication data of the terminal from the operator BOSS system, the network roaming method comprises:
detecting whether the terminal is within a jurisdiction of the device;
in response that the terminal is within the jurisdiction of the device, obtaining the original authentication data of the terminal from the operator BOSS system; and
in response that the terminal is not within the jurisdiction of the device, feeding back an authentication failure to the first network under the first deployment mode.

5. The network roaming authentication method according to claim 1, wherein the generating the first authentication information based on the original authentication data of the terminal comprises:
generating a home environment authentication vector based on the original authentication data of the terminal;
generating a service environment authentication vector based on the home environment authentication vector; and
taking the home environment authentication vector and the service environment authentication vector as the first authentication information;
wherein the home environment authentication vector and the service environment authentication vector conform to the first network specification under the first deployment mode.

6. The network roaming authentication method according to any one of claims 1 to 5, wherein the first network comprises a 5G network;
the first deployment mode is a stand-alone deployment mode and the second deployment mode is a non-stand-alone deployment mode.

7. A roaming intercommunication device, comprising
a receiving module (901), configured for receiving an authentication request from a terminal to access a first network under a first deployment mode, wherein the terminal is a registered user of the first network under a second deployment mode;
a conversion module (902), configured for obtaining original authentication data of the terminal and generating first authentication information based on the original authentication data of the terminal, wherein the first authentication information conforms to a first network specification under the first deployment mode; and
a communication module (903), configured for feeding back the first authentication information to the first network under the first deployment mode for the first network under the first deployment mode to authenticate the terminal.

8. The roaming intercommunication device according to claim 7, further comprising:
a storage module (904), configured for storing pre-imported original authentication data of a plurality of terminals; and
a detection module (905), configured for detecting whether the original authentication data of the terminal has been pre-imported;
the communication module (903), configured for obtaining original authentication data of the terminal from an operator BOSS system when detecting that the original authentication data of the terminal has not been pre-imported.

9. An electronic device, comprising:
at least one processor (1001); and
a memory (1002) communicated with the at least one processor (1001);
wherein the memory (1002) stores instructions executable by the at least one processor (1001), the instructions are executed by the at least one processor (1001) to enable the at least one processor (1001) to perform the network roaming authentication method according to any one of claims 1 to 6.

10. A computer readable storage medium, wherein a computer program is stored on the computer readable storage medium, and the computer program, when executed by a processor (1001), implements the network roaming authentication method according to any one of claims 1 to 6.

## Patentansprüche

1. Netzwerk-Roaming-Authentifizierungsverfahren, umfassend:
(501), Empfangen einer Authentifizierungsanforderung für ein Endgerät zum Zugriff auf ein erstes Netzwerk in einem ersten Bereitstellungsmodus, wobei das Endgerät ein registrierter Benutzer des ersten Netzwerks in einem zweiten Bereitstellungsmodus ist;
(502) Erhalten ursprünglicher Authentifizierungsdaten des Endgeräts und Erzeugen erster Authentifizierungsinformationen basierend auf den ursprünglichen Authentifizierungsdaten des Endgeräts, wobei die ersten Authentifizierungsinformationen einer ersten Netzwerkspezifikation in dem ersten Bereitstellungsmodus entsprechen; und
(503) Rückmelden der ersten Authentifizierungsinformationen an das erste Netzwerk in dem ersten Bereitstellungsmodus, damit das erste Netzwerk in dem ersten Bereitstellungsmodus das Endgerät authentifiziert.

2. Netzwerk-Roaming-Authentifizierungsverfahren nach Anspruch 1, wobei das Erhalten der ursprünglichen Authentifizierungsdaten des Endgeräts umfasst:
(602) Ermitteln, ob die ursprünglichen Authentifizierungsdaten des Endgeräts in einer vorab erstellten Authentifizierungsdatenbank vorhanden sind, wobei die Authentifizierungsdatenbank vorab importierte ursprüngliche Authentifizierungsdaten mehrerer Endgeräte umfasst; und
als Reaktion darauf, dass die ursprünglichen Authentifizierungsdaten des Endgeräts in der Authentifizierungsdatenbank vorhanden sind, Erhalten der ursprünglichen Authentifizierungsdaten des Endgeräts aus der Authentifizierungsdatenbank.

3. Netzwerk-Roaming-Authentifizierungsverfahren nach Anspruch 2, wobei das Erhalten der ursprünglichen Authentifizierungsdaten des Endgeräts weiter umfasst:
(604), als Reaktion darauf, dass keine ursprünglichen Authentifizierungsdaten des Endgeräts in der Authentifizierungsdatenbank vorhanden sind, Erhalten der ursprünglichen Authentifizierungsdaten des Endgeräts aus dem BOSS-System des Betreibers.

4. Netzwerk-Roaming-Authentifizierungsverfahren nach Anspruch 3, wobei vor dem Erhalten der ursprünglichen Authentifizierungsdaten des Endgeräts aus dem BOSS-System des Betreibers das Netzwerk-Roaming-Authentifizierungsverfahren umfasst:
Ermitteln, ob sich das Endgerät innerhalb eines Zuständigkeitsbereichs der Vorrichtung befindet;
als Reaktion darauf, dass sich das Endgerät innerhalb des Zuständigkeitsbereichs der Vorrichtung befindet, Erhalten der ursprünglichen Authentifizierungsdaten des Endgeräts aus dem BOSS-System des Betreibers; und
als Reaktion darauf, dass sich das Endgerät nicht innerhalb des Zuständigkeitsbereichs der Vorrichtung befindet, Rückmelden eines Authentifizierungsfehlers an das erste Netzwerk in dem ersten Bereitstellungsmodus.

5. Netzwerk-Roaming-Authentifizierungsverfahren nach Anspruch 1, wobei das Erzeugen der ersten Authentifizierungsinformationen basierend auf den ursprünglichen Authentifizierungsdaten des Endgeräts umfasst:
Erzeugen eines Authentifizierungsvektors für eine Heimumgebung basierend auf den ursprünglichen Authentifizierungsdaten des Endgeräts;
Erzeugen eines Authentifizierungsvektors für eine Dienstumgebung basierend auf dem Authentifizierungsvektor für die Heimumgebung; und
Verwenden des Authentifizierungsvektors für die Heimumgebung und des Authentifizierungsvektors für die Dienstumgebung als die ersten Authentifizierungsinformationen;
wobei der Authentifizierungsvektor für die Heimumgebung und der Authentifizierungsvektor für die Dienstumgebung der ersten Netzwerkspezifikation in dem ersten Bereitstellungsmodus entsprechen.

6. Netzwerk-Roaming-Authentifizierungsverfahren gemäß einem der Ansprüche 1 bis 5, wobei das erste Netzwerk ein 5G-Netzwerk umfasst;
wobei der erste Bereitstellungsmodus ein eigenständiger Bereitstellungsmodus ist und der zweite Bereitstellungsmodus ein nicht eigenständiger Bereitstellungsmodus ist.

7. Roaming-Interkommunikationsvorrichtung, umfassend:
ein Empfangsmodul (901), das dazu konfiguriert ist, von einem Endgerät eine Authentifizierungsanforderung für den Zugriff auf ein erstes Netzwerk in einem ersten Bereitstellungsmodus zu empfangen, wobei das Endgerät ein registrierter Benutzer des ersten Netzwerks in einem zweiten Bereitstellungsmodus ist;
ein Umwandlungsmodul (902), das dazu konfiguriert ist, ursprüngliche Authentifizierungsdaten des Endgeräts zu erhalten und basierend auf den ursprünglichen Authentifizierungsdaten des Endgeräts erste Authentifizierungsinformationen zu erzeugen, wobei die ersten Authentifizierungsinformationen einer ersten Netzwerkspezifikation in dem ersten Bereitstellungsmodus entsprechen; und
ein Kommunikationsmodul (903), das dazu konfiguriert ist, die ersten Authentifizierungsinformationen an das erste Netzwerk in dem ersten Bereitstellungsmodus zurückzumelden, damit das erste Netzwerk in dem ersten Bereitstellungsmodus das Endgerät authentifiziert.

8. Roaming-Interkommunikationsvorrichtung nach Anspruch 7, ferner umfassend:
ein Speichermodul (904), das dazu konfiguriert ist, vorab importierte ursprüngliche Authentifizierungsdaten mehrerer Endgeräte zu speichern; und
ein Ermittlungsmodul (905), das dazu konfiguriert ist, zu ermitteln, ob die ursprünglichen Authentifizierungsdaten des Endgeräts vorab importiert worden sind;
wobei das Kommunikationsmodul (903) dazu konfiguriert ist, ursprüngliche Authentifizierungsdaten des Endgeräts aus einem BOSS-System eines Betreibers zu erhalten, wenn ermittelt wird, dass die ursprünglichen Authentifizierungsdaten des Endgeräts nicht vorab importiert worden sind.

9. Elektronische Vorrichtung, umfassend:
mindestens einen Prozessor (1001); und
einen Speicher (1002), der mit dem mindestens einen Prozessor (1001) in Kommunikationsverbindung steht;
wobei der Speicher (1002) Anweisungen speichert, die von dem mindestens einen Prozessor (1001) ausführbar sind, und die Anweisungen von dem mindestens einen Prozessor (1001) ausgeführt werden, um den mindestens einen Prozessor (1001) zu veranlassen, das Netzwerk-Roaming-Authentifizierungsverfahren nach einem der Ansprüche 1 bis 6 durchzuführen.

10. Computerlesbares Speichermedium, wobei auf dem computerlesbaren Speichermedium ein Computerprogramm gespeichert ist und das Computerprogramm, wenn es durch einen Prozessor (1001) ausgeführt wird, das Netzwerk-Roaming-Authentifizierungsverfahren nach einem der Ansprüche 1 bis 6 implementiert.

## Revendications

1. Procédé d'authentification d'itinérance de réseau, comprenant :
(501), recevoir une requête d'authentification pour permettre à un terminal d'accéder à un premier réseau en premier mode de déploiement, le terminal étant un utilisateur enregistré du premier réseau en deuxième mode de déploiement ;
(502) obtenir des données d'authentification originales du terminal et générer une première information d'authentification sur la base des données d'authentification originales du terminal, la première information d'authentification étant conforme à une première spécification de réseau en premier mode de déploiement ; et
(503) renvoyer la première information d'authentification au premier réseau en premier mode de déploiement pour permettre au premier réseau en premier mode de déploiement d'authentifier le terminal.

2. Procédé d'authentification d'itinérance de réseau selon la revendication 1, dans lequel l'obtention des données d'authentification originales du terminal consiste à :
(602), détecter s'il existe les données d'authentification originales du terminal dans une base de données d'authentification pré-créée, la base de données d'authentification comprenant des données d'authentification originales pré-importées d'une pluralité de terminaux ; et
en réponse à l'existence des données d'authentification originales du terminal dans la base de données d'authentification, obtenir les données d'authentification originales du terminal depuis la base de données d'authentification.

3. Procédé d'authentification d'itinérance de réseau selon la revendication 2, dans lequel l'obtention des données d'authentification originales du terminal consiste en outre à :
(604), en réponse à non-existence des données d'authentification originales du terminal dans la base de données d'authentification, obtenir les données d'authentification originales du terminal depuis un système BOSS d'opérateur.

4. Procédé d'authentification d'itinérance de réseau selon la revendication 3, dans lequel, avant l'obtention des données d'authentification originales du terminal depuis le système BOSS d'opérateur, le procédé d'itinérance de réseau comprenant :
détecter si le terminal se trouve dans une juridiction du dispositif ;
en réponse à ce que le terminal se trouve dans la juridiction du dispositif, obtenir les données d'authentification originales du terminal depuis le système BOSS d'opérateur ; et
en réponse à ce que le terminal ne se trouve pas dans la juridiction du dispositif, renvoyer un échec d'authentification au premier réseau en premier mode de déploiement.

5. Procédé d'authentification d'itinérance de réseau selon la revendication 1, dans lequel la génération de la première information d'authentification sur la base des données d'authentification originales du terminal consiste à :
générer un vecteur d'authentification d'environnement domestique sur la base des données d'authentification originales du terminal ;
générer un vecteur d'authentification d'environnement de service sur la base du vecteur d'authentification d'environnement domestique ; et
prendre le vecteur d'authentification d'environnement domestique et le vecteur d'authentification d'environnement de service comme première information d'authentification ;
dans lequel le vecteur d'authentification d'environnement domestique et le vecteur d'authentification d'environnement de service sont conformes à la première spécification de réseau en premier mode de déploiement.

6. Procédé d'authentification d'itinérance de réseau selon l'une quelconque des revendications 1 à 5, dans lequel le premier réseau comprend un réseau 5G ;
le premier mode de déploiement est un mode de déploiement autonome et le deuxième mode de déploiement est un mode de déploiement non autonome.

7. Dispositif d'intercommunication d'itinérance, comprenant :
un module de réception (901), configuré pour recevoir une requête d'authentification pour permettre à un terminal d'accéder à un premier réseau en premier mode de déploiement, le terminal étant un utilisateur enregistré du premier réseau en deuxième mode de déploiement ;
un module de conversion (902), configuré pour obtenir des données d'authentification originales du terminal et générer une première information d'authentification sur la base des données d'authentification originales du terminal, la première information d'authentification étant conforme à une première spécification de réseau en premier mode de déploiement ; et
un module de communication (903), configuré pour renvoyer la première information d'authentification au premier réseau en premier mode de déploiement pour permettre au premier réseau en premier mode de déploiement d'authentifier le terminal.

8. Dispositif d'intercommunication d'itinérance selon la revendication 7, comprenant en outre :
un module de stockage (904), configuré pour stocker des données d'authentification originales pré-importées d'une pluralité de terminaux ; et
un module de détection (905), configuré pour détecter si les données d'authentification originales du terminal ont été pré-importées ;
le module de communication (903), configuré pour obtenir des données d'authentification originales du terminal depuis un système BOSS d'opérateur lorsqu'il détecte que les données d'authentification originales du terminal n'ont pas été pré-importées.

9. Dispositif électronique, comprenant :
au moins un processeur (1001) ; et
une mémoire (1002) en communication avec le ou les processeurs (1001) ;
dans lequel la mémoire (1002) stocke des instructions exécutables par le ou les processeurs (1001), les instructions sont exécutées par le ou les processeurs (1001), de sorte que le ou les processeurs (1001) mettent en œuvre le procédé d'authentification d'itinérance de réseau selon l'une quelconque des revendications 1 à 6.

10. Support de stockage lisible par ordinateur, dans lequel un programme informatique est stocké sur le support de stockage lisible par ordinateur, et le programme informatique, lorsqu'il est exécuté par un processeur (1001), met en œuvre le procédé d'authentification d'itinérance de réseau selon l'une quelconque des revendications 1 à 6.
